# EUROPEAN PATENT APPLICATION

(11) **EP 4 834 861 A1**
(43) Date of publication of application: **04.11.2026**
(21) Application number: 24912347.2
(22) Date of filing: 10.12.2024
(51) Int. Cl.: C04B 18/04, B01D 53/62, B09B 3/40, B28B 11/24, C01F 11/18, C04B 14/28, C04B 28/02, C09K 17/10, E02D 3/12

(54) **METHOD FOR PRODUCING CALCIUM CARBONATE, CALCIUM CARBONATE, METHOD FOR PRODUCING READY-MIXED MORTAR OR READY-MIXED CONCRETE, METHOD FOR IMPROVING GROUND, METHOD FOR FILLING UNDERGROUND CAVITY, AND METHOD FOR IMMOBILIZING CARBON DIOXIDE**

(30) Priority: 28.12.2023 JP 2023222143
(71) Applicant: Shiraishi Kogyo Kaisha, Ltd., Osaka-shi, Osaka 530-0005 (JP); Konoike Construction Co., Ltd., Osaka City Osaka 541-0057 (JP)
(72) Inventor: KEZUKA, Yuki, Amagasaki City, Hyogo 6600085 (JP); EGUCHI, Kenichiro, Amagasaki City, Hyogo 6600085 (JP); YOSHIDA, Maya, Amagasaki City, Hyogo 6600085 (JP); SHIOZAKI, Rie, Amagasaki City, Hyogo 6600085 (JP); OKADA, Kazunari, Osaka City, Osaka 541-0057 (JP); KOYAMA, Takashi, Osaka City, Osaka 541-0057 (JP); OYAMA, Sho, Osaka City, Osaka 541-0057 (JP); NAKASHIMA, Takuo, Osaka City, Osaka 541-0057 (JP); KATO, Mitsuru, Osaka City, Osaka 541-0057 (JP); KOMA, Takashi, Osaka City, Osaka 541-0057 (JP); SERA, Atsushi, Osaka City, Osaka 541-0057 (JP); TAKENAKA, Natsuko, Osaka City, Osaka 541-0057 (JP)
(74) Representative: Global IP Europe Patentanwaltskanzlei
(86) International application number: PCT/JP2024/043629
(87) International publication number: WO 2025/142458

(57) **Abstract**

An object of the present invention is to provide a novel method for producing, from carbide dregs which hitherto have been mostly discarded, calcium carbonate that, when mixed with ready-mixed concrete, does not reduce the fluidity of the ready-mixed concrete and does not reduce the strength of a cured product.

The present invention relates to a method for producing calcium carbonate, including the following steps:
a classification step of classifying carbide dregs containing calcium hydroxide and hydrophobic impurities and removing the hydrophobic impurities;
an adjustment step of adjusting a solid content concentration of the carbide dregs from which the hydrophobic impurities have been removed in the classification step; and
a carbon dioxide introduction step of introducing carbon dioxide into the carbide dregs from which the hydrophobic impurities have been removed in the classification step and in which the solid content concentration has been adjusted in the adjustment step, and
also relates to calcium carbonate produced by the method for producing calcium carbonate and a method for using calcium carbonate produced by the method for producing calcium carbonate.

## Description

### [TECHNICAL FIELD]

The present invention relates to a method for producing calcium carbonate, and calcium carbonate. The present invention further relates to a method for producing ready-mixed mortar or ready-mixed concrete by utilizing calcium carbonate. The present invention relates to a method for improving ground by utilizing calcium carbonate and a method for filling an underground cavity. The present invention further relates to a method for immobilizing carbon dioxide.

### [BACKGROUND]

Calcium carbide (CaC₂) used in the industrial production of acetylene is obtained by heating a mixture of calcium oxide and coke to about 2000°C. It is known that calcium carbide contains calcium phosphide, sulfur, and the like, which are impurities derived from raw materials. Calcium carbide can be reacted with water to produce acetylene. The carbide dregs (also referred to as carbide lime, carbide sludge, carbide slurry, and the like, and containing calcium hydroxide, Ca(OH) ₂ as a main component) by-produced in this reaction are aqueous slurries containing a variety of impurities. Carbide dregs are defined as a type of industrial waste sludge (Article 2(4) of the Industrial Waste Act, Article 2 of Cabinet Order) and have to be properly treated and then discarded. Carbide dregs may be used as a substitute for slaked lime (calcium hydroxide) in a neutralizing agent or the like for acidic soil, but most of the carbide dregs have not been effectively utilized.

Patent Literature 1 discloses a method for producing light calcium carbonate by granulating carbide dregs, charging the carbide dregs into a rotary kiln, blowing carbon monoxide and oxygen into the rotary kiln, and performing carbonation at a temperature of 500 to 900°C. Patent Literature 2 discloses a method for producing calcium carbonate from lime such as carbide lime, the method including a step (i) of providing an aqueous solution containing 10 wt% to 35 wt% of dissolved polyhydroxy compound and 1 wt% to 5 wt% of dissolved calcium hydroxide and having a pH of at least 11.5; a step (ii) of treating the solution prepared in step (i) to remove solids including suspended solids; a step (iii) of dispersing carbon dioxide in the solution so as to form calcium carbonate with a consequential reduction in the pH of the reaction mixture; a step (iv) of terminating the dispersion of carbon dioxide and adding an alkaline reagent to maintain a pH for the product mixture of at least 9.5 during a time period beginning at the start of a sudden, short rise in pH and ending during a subsequent fall in pH but before the pH reaches 9.5; and a step (v) of recovering precipitated calcium carbonate. Patent Literature 2 discloses that the polyhydroxy compound in step (i) is glycerol, sugar alcohol, sugar, or the like, and step (ii) is to remove suspended solids using a flocculating agent such as a cationic polymer.

Incidentally, attempts have been made to increase the strength of concrete by adding calcium carbonate to ready-mixed concrete, ready-mixed mortar, or the like. Patent Literature 3 discloses an admixture for high-strength concrete, the admixture containing light calcium carbonate powder having an average particle size of 0.19 µm or more and 0.33 µm or less and a pH of 8.5 or more and less than 11. Patent Literature 4 discloses an admixture slurry for high-strength concrete, the admixture slurry containing water, a water reducing agent (polycarboxylic acid-based), and light calcium carbonate powder having an average particle size of 0.1 µm or more and 0.4 µm or less and a pH of 8.5 or more and less than 11, the light calcium carbonate powder being contained in an amount of 60 mass% or more and 75 mass% or less.

It is known that it is difficult to achieve both the fluidity of the ready-mixed concrete and the strength of a cured product when the admixture is dispersed in the ready-mixed concrete; however, Patent Literatures 3 and 4 describe that the admixture containing calcium carbonate powder or a slurry thereof can be dispersed in the ready-mixed concrete at a relatively high concentration, and a decrease in fluidity of the ready-mixed concrete can be slightly suppressed. However, the development of ready-mixed concrete with further improved workability (overall construction properties of concrete such as mixing, transporting, pouring, compacting, and finishing) is always desired.

### [CITATION LIST]

### [PATENT LITERATURE]

[Patent Literature 1] JP 54-43897 A
[Patent Literature 2] JP 2013-506613 A
[Patent Literature 3] JP 6011926 B2
[Patent Literature 4] JP 6011927 B2

### [BRIEF SUMMARY]

### [TECHNICAL PROBLEM]

Therefore, an object of the present invention is to provide a novel method for producing, from carbide dregs which hitherto have been mostly discarded, calcium carbonate that, when mixed with ready-mixed concrete, does not reduce the fluidity of the ready-mixed concrete and does not reduce the strength of a cured product. Further, an object of the present invention is to provide a method for producing calcium carbonate-blended ready-mixed mortar or calcium carbonate-blended ready-mixed concrete by using the produced calcium carbonate, a method for improving ground by press-fitting a ground improving material blended with the produced calcium carbonate into ground, and a method for filling an underground cavity with a filler blended with the produced calcium carbonate. Further, an object of the present invention is to provide a method for producing industrially available calcium carbonate by using carbide dregs which hitherto have been discarded, and immobilizing carbon dioxide contained in an exhaust gas or the like as calcium carbonate.

### [SOLUTION TO PROBLEM]

A first aspect of the present invention is a method for producing calcium carbonate, including the following steps:
a classification step of classifying carbide dregs containing calcium hydroxide and hydrophobic impurities and removing the hydrophobic impurities;
an adjustment step of adjusting a solid content concentration of the carbide dregs from which the hydrophobic impurities have been removed in the classification step; and
a carbon dioxide introduction step of introducing carbon dioxide into the carbide dregs from which the hydrophobic impurities have been removed in the classification step and in which the solid content concentration has been adjusted in the adjustment step.

Here, a particle size of the hydrophobic impurities to be removed in the classification step is preferably 45 µm or more.

It is preferable that the solid content concentration of the carbide dregs from which the hydrophobic impurities have been removed is adjusted to 1 to 30 mass% in the adjustment step.

It is preferable that, in the carbon dioxide introduction step, carbon dioxide is introduced into the carbide dregs from which the hydrophobic impurities have been removed and in which the solid content concentration has been adjusted so that a carbonation rate of calcium ions is 1 to 40 cation%/hr.

It is preferable that a calcite-type calcium carbonate having a spindle shape is produced.

A second aspect of the present invention is calcium carbonate produced by the above-described production method.

A third aspect of the present invention is a method for producing calcium carbonate-blended ready-mixed mortar or calcium carbonate-blended ready-mixed concrete, the method including:
classifying carbide dregs containing calcium hydroxide and hydrophobic impurities and removing the hydrophobic impurities;
adjusting a solid content concentration of the carbide dregs from which the hydrophobic impurities have been removed;
introducing carbon dioxide into the carbide dregs from which the hydrophobic impurities have been removed and in which the solid content concentration has been adjusted to obtain calcium carbonate; and
mixing the obtained calcium carbonate with ready-mixed mortar or ready-mixed concrete to produce calcium carbonate-blended ready-mixed mortar or calcium carbonate-blended ready-mixed concrete.

A fourth aspect of the present invention is a method for improving ground, the method including:
classifying carbide dregs containing calcium hydroxide and hydrophobic impurities and removing the hydrophobic impurities;
adjusting a solid content concentration of the carbide dregs from which the hydrophobic impurities have been removed;
introducing carbon dioxide into the carbide dregs from which the hydrophobic impurities have been removed and in which the solid content concentration has been adjusted to obtain calcium carbonate; and
mixing the obtained calcium carbonate with a ground improving material and mixing or press-fitting the obtained calcium carbonate-blended ground improving material into ground to improve the ground.

A fifth aspect of the present invention is a method for filling an underground cavity, the method including:
classifying carbide dregs containing calcium hydroxide and hydrophobic impurities and removing the hydrophobic impurities;
adjusting a solid content concentration of the carbide dregs from which the hydrophobic impurities have been removed;
introducing carbon dioxide into the carbide dregs from which the hydrophobic impurities have been removed and in which the solid content concentration has been adjusted to obtain calcium carbonate; and
mixing the obtained calcium carbonate with a filler and filling an underground cavity with the obtained calcium carbonate-blended filler.

A sixth aspect of the present invention is a method for immobilizing carbon dioxide contained in an exhaust gas, the method including:
classifying carbide dregs containing calcium hydroxide and hydrophobic impurities and removing the hydrophobic impurities;
adjusting a solid content concentration of the carbide dregs from which the hydrophobic impurities have been removed; and
introducing an exhaust gas containing carbon dioxide into the carbide dregs from which the hydrophobic impurities have been removed and in which the solid content concentration has been adjusted to immobilize the carbon dioxide.

### [ADVANTAGEOUS EFFECTS OF INVENTION]

It is possible to produce, from carbide dregs which hitherto have been mostly discarded, calcium carbonate that, when mixed with ready-mixed concrete, does not reduce the fluidity of the ready-mixed concrete and does not reduce the strength of a cured product. The calcium carbonate thus produced can be mixed with ready-mixed mortar or ready-mixed concrete and used for construction of a structure, and can be mixed with a ground improving material or a filler for an underground cavity and used for improvement of the ground or backfilling of an underground cavity. It is possible to produce, from carbide dregs which are wastes and an exhaust gas which is also waste, industrially available calcium carbonate and to immobilize carbon dioxide gas in the exhaust gas.

### [BRIEF DESCRIPTION OF DRAWINGS]

[Fig.1] Fig. 1 is a scanning electron micrograph (magnification: 10,000 times) of calcium carbonate obtained in Example 2.
[Fig.2] Fig. 2 is a scanning electron micrograph (magnification: 20,000 times) of calcium carbonate obtained in Example 2.

### [DESCRIPTION OF EMBODIMENTS]

Although embodiments of the present invention will be described in more detail, the present invention is not limited only to the following embodiments.

A first embodiment is a method for producing calcium carbonate, including the following steps:
a classification step of classifying carbide dregs containing calcium hydroxide and hydrophobic impurities and removing the hydrophobic impurities;
an adjustment step of adjusting a solid content concentration of the carbide dregs from which the hydrophobic impurities have been removed in the classification step; and
a carbon dioxide introduction step of introducing carbon dioxide into the carbide dregs from which the hydrophobic impurities have been removed in the classification step and in which the solid content concentration has been adjusted in the adjustment step.

In the first embodiment, carbide dregs are mainly residues obtained after industrial production of acetylene from calcium carbide (CaC₂) and are aqueous slurries. The carbide dregs contain calcium hydroxide (Ca(OH)₂) and hydrophobic impurities. The hydrophobic impurities contained in the carbide dregs are mainly coke residues, and may also contain sulfur, silicon carbide, or the like. The hydrophobic impurities are components other than the calcium hydroxide and refer to all of the impurities which are present without dissolving in the aqueous carbide dregs. The first embodiment includes a step of classifying carbide dregs. This classification step is a step of removing hydrophobic impurities contained in the carbide dregs by a classification operation. Particles of calcium hydroxide, which is a main component of the carbide dregs, and particles of hydrophobic impurities have different particle sizes, and the particle size of the hydrophobic impurities is generally larger. Thus, the hydrophobic impurities can be removed from the carbide dregs by known classification operations (such as filtration using filter paper, filter cloth, filtering apparatus, or the like, and classification by a classification device). The particle size of the hydrophobic impurities to be removed in the classification step is preferably 45 µm or more. When the lower limit value of the particle size of the hydrophobic impurities to be removed from the carbide dregs is increased (for example, the lower limit value of the particle size is set to 200 µm), the amount of the hydrophobic impurities remaining in the carbide dregs increases, so that the hydrophobic impurities tend to remain also in the calcium carbonate to be finally produced in the first embodiment. When the lower limit value of the particle size of the hydrophobic impurities to be removed from the carbide dregs is reduced (for example, the lower limit value of the particle size is set to 10 µm), the hydrophobic impurities in the carbide dregs can be almost completely removed, but calcium hydroxide particles are also removed, so that the yield of the calcium carbonate to be finally produced in the first embodiment is reduced. Note that, here, the value of the particle size of the particles of calcium hydroxide and hydrophobic impurities is a value obtained by any of measurement by image analysis using an electron microscope or an optical microscope and measurement using residue after wet sieving, and the same value is obtained in any measurement. The separation step of removing hydrophobic impurities from the carbide dregs is a very important step in producing calcium carbonate to be mixed with ready-mixed mortar or ready-mixed concrete. When the carbon dioxide introduction step described below is performed as it is without removing the hydrophobic impurities from the carbide dregs, the hydrophobic impurities remain also in the calcium carbonate to be finally obtained. In this case, since the surface of the calcium carbonate particles has water repellency, the calcium carbonate is hardly mixed with ready-mixed mortar or ready-mixed concrete.

The first embodiment includes an adjustment step of adjusting the solid content concentration of the carbide dregs from which the hydrophobic impurities have been removed in the classification step. The adjustment step is a step of adjusting the solid content concentration of the carbide dregs. Here, the solid content refers to all components other than water contained in the carbide dregs after the hydrophobic impurities are removed. The carbide dregs from which the hydrophobic impurities have been removed in the classification step mainly contain calcium hydroxide particles having a particle size of less than 45 µm as a solid content, and a trace amount (5 mass% or less) of hydrophobic impurities may remain. The solid content concentration is a mass ratio of all components other than water to the mass of the carbide dregs after the hydrophobic impurities are removed. In the adjustment step, the solid content concentration of the carbide dregs from which the hydrophobic impurities have been removed can be adjusted to 1 to 30 mass%, preferably 5 to 20 mass%, and further preferably 7 to 10 mass%. When the solid content concentration of the carbide dregs from which the hydrophobic impurities have been removed is higher than the desired range, water is added to the carbide dregs from which the hydrophobic impurities have been removed, and when the solid content concentration of the carbide dregs from which the hydrophobic impurities have been removed is lower than the desired range, calcium hydroxide may be added to the carbide dregs from which the hydrophobic impurities have been removed, or a part of the supernatant may be removed after the solid content of the carbide dregs from which the hydrophobic impurities have been removed is precipitated over time. By adjusting the solid content concentration to an appropriate range in the adjustment step, the fluidity of the carbide dregs (slurry) after the hydrophobic impurities are removed can be maintained, whereby the efficiency of the reaction in the carbon dioxide introduction step described below can be improved. When the solid content concentration of the carbide dregs from which the hydrophobic impurities have been removed is too large or too small, the properties of the calcium carbonate to be produced in the first embodiment may be unsuitable for mixing in ready-mixed mortar or ready-mixed concrete. Note that desired properties and characteristics of the calcium carbonate to be produced in the first embodiment will be described in detail later.

The first embodiment includes a carbon dioxide introduction step of introducing carbon dioxide into the carbide dregs from which the hydrophobic impurities have been removed in the classification step and in which the solid content concentration has been adjusted in the adjustment step. This step is a step of synthesizing calcium carbonate by reacting carbon dioxide with calcium hydroxide contained in the carbide dregs. In the carbon dioxide introduction step, when carbon dioxide is introduced into the carbide dregs from which the hydrophobic impurities have been removed in the classification step and in which the solid content concentration has been adjusted in the adjustment step, it is preferable to introduce carbon dioxide while adjusting the carbonation rate of calcium ions to 1 to 40 cation%/hr. The fact that the carbonation rate of calcium ions is 1 to 40 cation atom%/hr means that 1 to 40% per hour of the total calcium ions (cations) of calcium hydroxide contained in the carbide dregs from which the hydrophobic impurities have been removed in the classification step and in which the solid content concentration has been adjusted in the adjustment step react to change into calcium carbonate. That is, the fact that the carbonation rate is 1 cation%/hr means that it takes 100 hours for calcium hydroxide to react and convert to calcium carbonate. The fact that the carbonation rate is 40 cation%/hr means that the conversion reaction from calcium hydroxide to calcium carbonate is completed in 2.5 hours. It is possible to introduce carbon dioxide into the carbide dregs from which the hydrophobic impurities have been removed in the classification step and in which the solid content concentration has been adjusted in the adjustment step so that the carbonation rate is preferably 5 to 30 cation%/hr and further preferably 10 to 20 cation%/hr.

The temperature of the carbon dioxide introduction step, particularly the reaction starting temperature before introduction of carbon dioxide of the carbide dregs from which the hydrophobic impurities have been removed in the classification step and in which the solid content concentration has been adjusted in the adjustment step, is important. The reaction starting temperature can be set to 8 to 60°C, preferably about 15 to 50°C. When the reaction starting temperature is too low or too high, a decrease in properties of calcium carbonate to be produced in the first embodiment may occur. The carbon dioxide introduction step is preferably performed so as to constantly maintain the above temperature range.

The calcium carbonate to be produced in the first embodiment is a carbonate of calcium represented by the composition formula CaCO₃, and is a main component of seashells, chicken egg shells, limestone, chalk, and the like. Calcium carbonate is classified into ground calcium carbonate (natural calcium carbonate) obtained by grinding and classifying limestone and light calcium carbonate (synthetic calcium carbonate) obtained by chemical reaction, and calcium carbonate to be produced in the first embodiment is light calcium carbonate. Calcium carbonate includes crystal polymorphs such as a calcite crystal (trigonal rhombohedral crystal), an aragonite crystal (orthorhombic crystal system), and a vaterite crystal (hexagonal crystal). It is preferable that the calcium carbonate to be produced in the first embodiment is a calcite-type crystal and has a spindle shape.

The calcium carbonate to be produced in the first embodiment can be used for a wide range of applications similarly to conventional calcium carbonate. The calcium carbonate produced by the production method of the first embodiment is calcium carbonate having the proportion of impurities and various crystal forms, which are derived from the properties of carbide dregs used as raw materials. Therefore, it is difficult to clearly define, as a substance, the calcium carbonate of a second embodiment of the present invention produced by the production method of the first embodiment.

Calcium carbonate can be used, for example, for neutralization of wastewater, flue gas desulfurization, and can also be used as a filler for building materials, concrete, fertilizers, paints, and the like. The calcium carbonate to be obtained in the first embodiment can be effectively used particularly as an additive to ready-mixed mortar or ready-mixed concrete, and is intended to be used for improvement of the ground and filling of an underground cavity. The ready-mixed concrete is a composite material obtained by mixing and kneading granular aggregates such as sand and gravel, hydraulic cement, a binder containing slag fine powder, fly ash and the like, water, and various admixtures. The recently demanded ready-mixed concrete for high-strength concrete has a reduced water binder ratio (weight ratio of water and the binder), and has low fluidity and low workability during construction work in some cases. The ready-mixed concrete for high-strength concrete may have to be kneaded for a long time until ready-mixed concrete having good workability and fluidity is obtained, and a lot of time is required for concrete construction. Therefore, attempts have been hitherto made to add calcium carbonate to ready-mixed concrete to improve the fluidity of the ready-mixed concrete and shorten the kneading time.

The characteristics required for the ready-mixed concrete blended with calcium carbonate are generally called workability. Workability refers to workability on concrete construction in consideration of both resistance (consistency) to plastic deformation and flow of the ready-mixed concrete and resistance to separation of components contained in the ready-mixed concrete, and is the most important index as a property of the ready-mixed concrete. The workability is specifically a general index of concrete workability related to a series of operations including kneading, transporting, pouring, and compacting of the ready-mixed concrete, and finishing of the poured concrete, and the determination criterion varies depending on the type of structure, construction site, and construction method. In the first embodiment, calcium carbonate as an additive that does not impair the ease of kneading and mixing of the ready-mixed concrete, which is one of the factors for determining the workability of the ready-mixed concrete, can be produced by using carbide dregs, which are wastes, as raw materials.

A third embodiment of the present invention is a method for producing calcium carbonate-blended ready-mixed mortar or calcium carbonate-blended ready-mixed concrete, the method including:
classifying carbide dregs containing calcium hydroxide and hydrophobic impurities and removing the hydrophobic impurities;
adjusting a solid content concentration of the carbide dregs from which the hydrophobic impurities have been removed;
introducing carbon dioxide into the carbide dregs from which the hydrophobic impurities have been removed and in which the solid content concentration has been adjusted to obtain calcium carbonate; and
mixing the obtained calcium carbonate with ready-mixed mortar or ready-mixed concrete to produce calcium carbonate-blended ready-mixed mortar or calcium carbonate-blended ready-mixed concrete.

The third embodiment includes all steps of the production method of the first embodiment. Calcium carbonate-blended ready-mixed mortar or calcium carbonate-blended ready-mixed concrete can be produced by mixing the calcium carbonate produced in the first embodiment with ready-mixed mortar or ready-mixed concrete. The ready-mixed mortar is obtained by kneading cement, water, and fine aggregate such as sand, and the ready-mixed concrete is obtained by further adding coarse aggregate such as gravel to the mortar and kneading the mixture. In addition to these components, the ready-mixed mortar or the ready-mixed concrete can appropriately contain admixtures such as a water reducing agent for enhancing the fluidity of the ready-mixed mortar or the ready-mixed concrete, and a retarder for delaying the solidification of the ready-mixed mortar or the ready-mixed concrete for a predetermined time. As the water reducing agent, so-called anionic surfactants such as carboxyl group-containing polyether, lignin sulfonate, and oxycarboxylate can be used. As the retarder, an agent containing an oxycarboxylate, such as sodium gluconate, as a main component can be used. The admixtures such as a water reducing agent and a retarder for ready-mixed mortar or ready-mixed concrete are commercially available in various kinds in accordance with various conditions such as a shape of a structure, a construction site, and a construction period, and can be appropriately obtained from these materials.

The calcium carbonate-blended ready-mixed mortar or the calcium carbonate-blended ready-mixed concrete to be produced by the third embodiment is easy to knead and has high workability. The cured product obtained by curing the calcium carbonate-blended ready-mixed mortar or the calcium carbonate-blended ready-mixed concrete to be produced by the second embodiment has a higher strength than the cured product obtained by curing ready-mixed mortar or ready-mixed concrete not blended with calcium carbonate, and a high-strength mortar structure or a high-strength concrete structure can be provided.

A fourth embodiment of the present invention is a method for improving ground, the method including:
classifying carbide dregs containing calcium hydroxide and hydrophobic impurities and removing the hydrophobic impurities;
adjusting a solid content concentration of the carbide dregs from which the hydrophobic impurities have been removed;
introducing carbon dioxide into the carbide dregs from which the hydrophobic impurities have been removed and in which the solid content concentration has been adjusted to obtain calcium carbonate; and
mixing the obtained calcium carbonate with a ground improving material and mixing or press-fitting the obtained calcium carbonate-blended ground improving material into ground to improve the ground.

The fourth embodiment includes all steps of the production method of the first embodiment. The ground can be improved by mixing calcium carbonate produced in the first embodiment with a ground improving material, and mixing or press-fitting the calcium carbonate-blended ground improving material into the ground. The ground improving material is a material used for improving a bearing capacity of a land that cannot be used as a foundation of a building or a structure as it is when the building or the structure is constructed. The ground improving material is used for enhancing the strength of the ground from the viewpoint of suppressing deformation, subsidence, liquefaction, and the like of soft ground. As the method for improving ground, a direct foundation (surface layer improvement method in which a ground improving material is mixed or press-fitted into stable ground) and a pile foundation (columnar improvement method in which a columnar column is constructed by mixing or press-fitting a ground improving material into stable ground, and steel pipe pile method in which a steel pipe pile is press-fitted into stable ground) are known, and the method of the third embodiment can be applied particularly to the surface layer improvement method and the columnar improvement method. As the ground improving material, cement, a cement-based solidifying material, lime, a lime solidifying material, a cement/lime composite solidifying material, and a polymer solidifying material are known. The ground improving material is commercially available in various kinds in accordance with various conditions such as topography and environment of a construction site, and can be appropriately obtained from these materials. The third embodiment can be applied to any type of ground improving material. The ground improving material is made of substantially the same material as ready-mixed mortar or ready-mixed concrete. Although depending on the characteristics and the like of the ground to be improved, generally, the blending amount of water in the ground improving material is often larger than that in the ready-mixed mortar or the ready-mixed concrete.

By carrying out the fourth embodiment, a ground having high strength suitable for a building or a structure can be obtained, so that a stable foundation of the building or the structure can be formed. The calcium carbonate-blended ground improving material used in the third embodiment is easy to knead and has high workability.

A fifth embodiment of the present invention is a method for filling an underground cavity, the method including:
classifying carbide dregs containing calcium hydroxide and hydrophobic impurities and removing the hydrophobic impurities;
adjusting a solid content concentration of the carbide dregs from which the hydrophobic impurities have been removed;
introducing carbon dioxide into the carbide dregs from which the hydrophobic impurities have been removed and in which the solid content concentration has been adjusted to obtain calcium carbonate; and
mixing the obtained calcium carbonate with a filler and filling an underground cavity with the obtained calcium carbonate-blended filler.

The fifth embodiment includes all steps of the production method of the first embodiment. A filler can be mixed with the calcium carbonate produced in the first embodiment, and the underground cavity can be filled with the calcium carbonate-blended filler. In construction of a building or a structure on the ground surface, when an underground cavity that cannot be visually recognized from the ground surface is found by a boring survey or the like, such an underground cavity may have to be backfilled. When the underground cavity is allowed to be left, the ground surface may be depressed or ground sinking may occur, and thus it may be necessary to fill the underground cavity to prevent such a situation. Here, the underground cavity refers to all cavities existing under the ground including all natural cavities such as limestone caves, dolines, lava tunnels, and weathered caves, mining traces of metal mines and the like, mining traces of coal and the like, mining traces of stones and the like, artificial cavities such as underground bunkers such as air-raid shelters, and underground streets, tunnels, and piping work traces. The filler for backfilling the underground cavity is required to have fluidity spreading throughout the cavity when filling the cavity, and to be a solidified material having necessary strength after solidification. As such a filler for an underground cavity, typically, solidifying material containing gypsum and lime, a cement-based solidifying material, or a slag-based filler containing molten slag, blast-furnace slag, and an aggregate is used. The filler for an underground cavity is commercially available in various kinds in accordance with various conditions such as topography and environment of a construction site, and can be appropriately obtained from these materials. The fourth embodiment can be applied to any type of filler.

By carrying out the fifth embodiment, it is possible to form a solidified material having high strength to every corner of the underground cavity, and it is possible to safely backfill the underground cavity. The calcium carbonate-blended filler used in the fourth embodiment has high fluidity, is easy to knead, and also has high workability.

A sixth embodiment of the present invention is a method for immobilizing carbon dioxide contained in an exhaust gas, the method including:
classifying carbide dregs containing calcium hydroxide and hydrophobic impurities and removing the hydrophobic impurities;
adjusting a solid content concentration of the carbide dregs from which the hydrophobic impurities have been removed; and
introducing an exhaust gas containing carbon dioxide into the carbide dregs from which the hydrophobic impurities have been removed and in which the solid content concentration has been adjusted to immobilize the carbon dioxide.

The sixth embodiment includes all steps of the production method of the first embodiment in principle. In producing calcium carbonate in the first embodiment, an exhaust gas is used as a supply source of carbon dioxide. The exhaust gas refers to a gas generally discharged from a gasoline engine, a diesel engine, an internal combustion engine, and a factory. The untreated exhaust gas usually contains a large amount of carbon dioxide as a greenhouse gas in addition to water vapor and harmful gases such as carbon monoxide. It is not desirable to discharge such an exhaust gas into the atmosphere without treating the exhaust gas, which leads to environmental pollution and global warming. The fifth embodiment is a method for obtaining calcium carbonate that can be used in the method of the above second, third, or fourth embodiment by using carbide dregs, which hitherto have been discarded as industrial wastes, as raw materials and reacting carbon dioxide in the exhaust gas. By carrying out the fifth embodiment, carbon dioxide in the exhaust gas is immobilized as calcium carbonate, and the obtained calcium carbonate can be used in a ground improving material, a filler for an underground cavity, and the like in addition to blending into ready-mixed mortar or ready-mixed concrete.

### [Examples]

Hereinafter, embodiments of the present invention will be specifically described. The present invention is not limited to the following Examples.

### [Example 1]

### <Production of calcium carbonate>

Carbide dregs available from Koatsu Gas Kogyo Co., Ltd. were passed through a sieve (Japanese Industrial Standards JIS Z 8801, company name: SIEVE FACTORY IIDA Co., Ltd.) having a mesh diameter of 100 µm to remove particles having a diameter of 100 µm or more from the carbide dregs. The solid content concentration of the obtained carbide dregs was adjusted to 10%. Subsequently, the temperature of the obtained carbide dregs was set to 28°C, and the carbide dregs were stirred while introducing carbon dioxide gas so that the carbonation rate of calcium ions was 12 cation%/hr (so that the time until the completion of the reaction was 8.1 hours). The obtained slurry was filtered and dried in an oven at 105°C for 1 hour to obtain a spindle-shaped calcite-type calcium carbonate (BET specific surface area measured by a method in accordance with JIS Z 8830: 5.9 m²/g).

### <Production of ready-mixed concrete>

Ready-mixed cement containing ordinary portland cement (Japanese Industrial Standards JIS R 5210, density: 3.14 to 3.17 g/cm³), ground granulated blast-furnace slag 4000 (Japanese Industrial Standards JIS A 6206, density: 2.8 g/cm³ or more), crushed sand having a particle size of 5 mm or less (Japanese Industrial Standards JIS A 5005, produced in Joyo-shi, Kyoto, density: 2.5 g/cm³ or more) as a fine aggregate, crushed stone having a particle size of 5 to 15 mm (Japanese Industrial Standards JIS A 5005, produced in Kameoka-shi, Kyoto, density: 2.5 g/cm³ or more) as a coarse aggregate, a high-range water reducing agent (Type I) containing a carboxyl group-containing polyether-based compound as a main component (Japanese Industrial Standards JIS A 6204, density: 1.04 to 1.08 g/cm³) as the admixture A, a water reducing agent of delayed type (Type I) containing an oxycarboxylate as a main component (Japanese Industrial Standards JIS A 6206, density: 1.17 to 1.21 g/cm³) as the admixture B, and water was prepared. Ready-mixed concrete was blended with the calcium carbonate obtained above and was kneaded and mixed using an inverter biaxial forced-stirring concrete mixer (name: MIC-109-0-31 Type, company name: Marui & Co., Ltd.). The detailed blending ratio of the calcium carbonate-blended ready-mixed concrete was as described in Table 1. From this ready-mixed concrete, a concrete specimen to be used in a compressive strength test described below was prepared.

### <Compressive strength test>

In the compressive strength test, the compressive strength after 24 hours and the compressive strength after 14 days of the concrete were measured in accordance with Japanese Industrial Standards JIS A 1108:2018 "Method of test for compressive strength of concrete".

### [Example 2]

Calcium carbonate was produced under the same conditions as in Example 1 except that the carbide dregs were passed through a sieve (Japanese Industrial Standards JIS Z 8801, company name: SIEVE FACTORY IIDA Co., Ltd.) having a mesh diameter of 150 µm, and carbon dioxide gas was introduced so that the carbonation rate of calcium ions was 17 cation%/hr (so that the time until the completion of the reaction was 5.9 hours). A spindle-shaped calcite-type calcium carbonate was obtained (BET specific surface area measured by a method in accordance with JIS Z 8830: 8.4 m²/g).

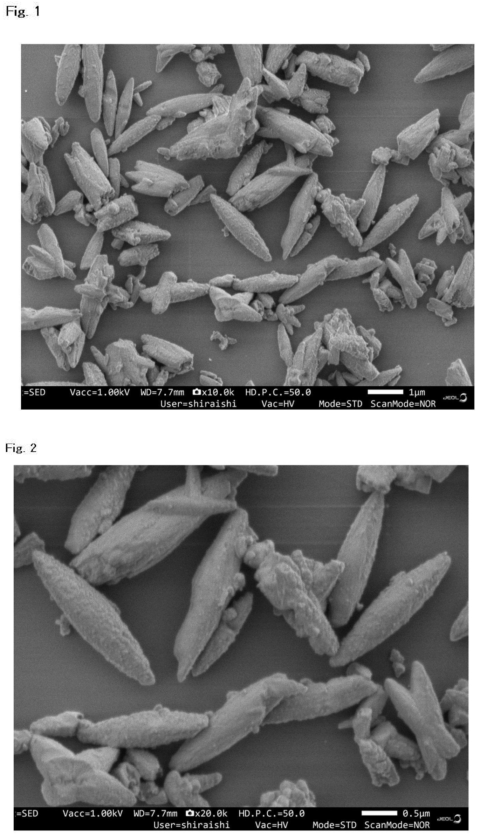

Ready-mixed concrete containing the same components as in Example 1 was blended with the obtained calcium carbonate, and the compressive strength test was performed. The detailed blending ratio of the ready-mixed concrete and the blending ratio of calcium carbonate are presented in Table 1. Scanning electron micrographs of the spindle-shaped calcite-type calcium carbonate obtained in Example 2 are illustrated in Fig. 1 (magnification: 10,000 times) and Fig. 2 (magnification: 20,000 times).

**[Table 1]**

| Table 1: Ready-mixed concrete test (Example) | | | | | |
|---|---|---|---|---|---|
| | | | | Example 1 | Example 2 |
| Production of calcium carbonate | Raw material | | | Carbide dregs | Carbide dregs |
| | Particle size of removed hydrophobic impurities | | µm or more | 100 | 150 |
| | Solid content concentration | | wt% | 10 | 10 |
| | Reaction starting temperature | | °C | 28 | 28 |
| | Carbonation rate | | cation%/hr | 12 | 17 |
| | BET specific surface area | | m²/g | 5.9 | 8.4 |
| Calcium carbonate-blended ready-mixed concrete | P | | kg/m³ | 440 | 500 |
| | B | | kg/m³ | 220 | 280 |
| | C | | kg/m³ | 88 | 84 |
| | BFS | | kg/m³ | 132 | 196 |
| | F | | kg/m³ | 220 | 220 |
| | W/P | | wt% | 40 | 35 |
| | s/a | | % | 41 | 41 |
| | A | Addition ratio | wt% | 1.3 | 1.2 |
| | | Addition amount P·wt% | kg/m³ | 5.72 | 6.00 |
| | B | Addition ratio | wt% | 0.1 | 0.1 |
| | | Addition amount P·wt% | kg/m³ | 0.44 | 0.50 |
| | A + B addition amount P·wt% | | kg/m³ | 6.16 | 6.50 |
| | Kneading and mixing time | | sec | 90 | 90 |
| Concrete strength | Compressive strength after 24 hours | | N/mm² | 4 | 7.6 |
| | Compressive strength after 14 days | | N/mm² | 41.5 | 54.9 |
| Workability | Evaluation | | | Excellent | Excellent |
| | Remarks | | | Very good in kneading and mixing | Very good in kneading and mixing |

### [Comparative Example 1]

Calcium carbonate was produced under the same conditions as in Example 1 except that the carbide dregs were not passed through any sieve and the reaction starting temperature of the carbon dioxide introduction step was set to 30°C. A spindle-shaped calcite-type calcium carbonate was obtained (BET specific surface area measured by a method in accordance with JIS Z 8830: 8.5 m²/g).

Ready-mixed concrete having the same components and blending ratio as in Example 1 was blended with the obtained calcium carbonate at the same blending ratio as in Example 1, and the compressive strength test was performed.

### [Comparative Example 2]

Calcium carbonate was produced under the same conditions as in Example 1 except that the carbide dregs were passed through a sieve (Japanese Industrial Standards JIS Z 8801, company name: SIEVE FACTORY IIDA Co., Ltd.) having a mesh diameter of 75 µm, and carbon dioxide gas was introduced so that the carbonation rate of calcium ions was 50 cation%/hr (so that the time until the completion of the reaction was 2.0 hours). A cubic calcite-type calcium carbonate was obtained (BET specific surface area measured by a method in accordance with JIS Z 8830: 27.0 m²/g).

Ready-mixed concrete having the same components and blending ratio as in Example 1 was blended with the obtained calcium carbonate at the same blending ratio as in Example 1, and the compressive strength test was performed.

### [Comparative Example 3]

Calcium carbonate was produced under the same conditions as in Example 1 except that the carbide dregs were passed through a sieve (Japanese Industrial Standards JIS Z 8801, company name: SIEVE FACTORY IIDA Co., Ltd.) having a mesh diameter of 75 µm, and carbon dioxide gas was introduced so that the carbonation rate of calcium ions was 0.5 cation%/hr (so that the time until the completion of the reaction was 200 hours). A spindle-shaped calcite-type calcium carbonate was obtained (BET specific surface area measured by a method in accordance with JIS Z 8830: 4.0 m²/g).

Ready-mixed concrete having the same components and blending ratio as in Example 1 was blended with the obtained calcium carbonate at the same blending ratio as in Example 1, and the compressive strength test was performed.

### [Comparative Example 4]

Calcium carbonate was produced under the same conditions as in Example 1 except that the carbide dregs were not passed through any sieve, the reaction starting temperature of the carbon dioxide introduction step was set to 8°C, and carbon dioxide gas was introduced so that the carbonation rate of calcium ions was 8.9 cation%/hr (so that the time until the completion of the reaction was 11.3 hours). A cubic calcite-type calcium carbonate was obtained (BET specific surface area measured by a method in accordance with JIS Z 8830: 42.0 m²/g).

Ready-mixed concrete containing the same components as in Example 1 was blended with the obtained calcium carbonate at a blending ratio presented in Table 2, and the compressive strength test was performed.

### [Comparative Example 5]

Calcium carbonate was produced under the same conditions as in Example 1 except that the carbide dregs were passed through a sieve (Japanese Industrial Standards JIS Z 8801, company name: SIEVE FACTORY IIDA Co., Ltd.) having a mesh diameter of 75 µm, the reaction starting temperature of the carbon dioxide introduction step was set to 65°C, and carbon dioxide gas was introduced so that the carbonation rate of calcium ions was 16.7 cation%/hr (so that the time until the completion of the reaction was 6 hours). A spindle-shaped calcite-type calcium carbonate was obtained (BET specific surface area measured by a method in accordance with JIS Z 8830: 4.0 m²/g).

Ready-mixed concrete containing the same components as in Example 1 was blended with the obtained calcium carbonate at a blending ratio presented in Table 2, and the compressive strength test was performed.

### [Comparative Example 6]

Calcium carbonate was produced under the same conditions as in Example 1 except that the carbide dregs were passed through a sieve (Japanese Industrial Standards JIS Z 8801, company name: SIEVE FACTORY IIDA Co., Ltd.) having a mesh diameter of 75 µm, the solid content concentration of the carbide dregs was adjusted to 0.5% in the adjustment step, and carbon dioxide gas was introduced so that the carbonation rate of calcium ions was 200 cation%/hr (so that the time until the completion of the reaction was 0.5 hours). A cubic calcite-type calcium carbonate was obtained (BET specific surface area measured by a method in accordance with JIS Z 8830: 3.0 m²/g).

Ready-mixed concrete containing the same components as in Example 1 was blended with the obtained calcium carbonate at a blending ratio presented in Table 2, and the compressive strength test was performed.

### [Comparative Example 7]

Calcium carbonate was produced under the same conditions as in Example 1 except that the carbide dregs were passed through a sieve (Japanese Industrial Standards JIS Z 8801, company name: SIEVE FACTORY IIDA Co., Ltd.) having a mesh diameter of 75 µm, the reaction starting temperature of the carbon dioxide introduction step was set to 14°C, the solid content concentration of the carbide dregs was adjusted to 32% in the adjustment step, and carbon dioxide gas was introduced so that the carbonation rate of calcium ions was 13 cation%/hr (so that the time until the completion of the reaction was 7.6 hours). Aggregates of calcite-type calcium carbonate were obtained (BET specific surface area measured by a method in accordance with JIS Z 8830: 16.9 m²/g).

Ready-mixed concrete containing the same components as in Example 1 was blended with the obtained calcium carbonate at a blending ratio presented in Table 2, and the compressive strength test was performed.

Experimental conditions and the ready-mixed concrete blending ratio of Comparative Examples are presented in Table 2.

**[Table 2-1]**

| Table 2-1: Ready-mixed concrete test (Comparative Example) | | | | | | | | |
|---|---|---|---|---|---|---|---|---|
| | | | Comparative Example 1 | Comparative Example 2 | Comparative Example 3 | Comparative Example 4 | Comparative Example 5 | |
| Production of calcium carbonate | Raw material | | Carbide dregs | Carbide dregs | Carbide dregs | Carbide dregs | Carbide dregs | |
| | Particle size of removed hydrophobic impurities | µm or more | | 75 | 75 | - | 75 | |
| | Solid content concentration | wt% | 10 | 10 | 10 | 10 | 10 | |
| | Reaction starting temperature | °C | 30 | 28 | 28 | 8 | 65 | |
| | Carbonation rate | | cation%/hr | 12 | 50 | 0.5 | 8.9 | 17 |
| | BET specific surface area | | m²/g | 8.5 | 27.0 | 4.0 | 42.0 | 4.0 |
| Calcium carbonate-blended ready-mixed concrete | P | | kg/m³ | 440 | 440 | 440 | 440 | 440 |
| | B | | kg/m³ | 220 | 220 | 220 | 220 | 220 |
| | C | | kg/m³ | 88 | 88 | 88 | 88 | 88 |
| | BFS | | kg/m³ | 132 | 132 | 132 | 132 | 132 |
| | F | | kg/m³ | 220 | 220 | 220 | 220 | 220 |
| | W/P | | wt% | 40 | 40 | 40 | 40 | 40 |
| | s/a | | % | 41 | 41 | 41 | 41 | 41 |
| | A | Addition ratio | wt% | 1.3 | 1.0 | 1.0 | 1.0 | 1.0 |
| | | Addition amount P·wt% | kg/m³ | 5.72 | 4.40 | 4.40 | 4.40 | 4.40 |
| | B | Addition ratio | wt% | 1.00 | 1.0 | 1.0 | 1.0 | 1.0 |
| | | Addition amount P·wt% | kg/m³ | 4.40 | 4.40 | 4.40 | 4.40 | 4.40 |
| | A + B addition amount P·wt% | | kg/m³ | 10.1 | 8.80 | 8.80 | 8.80 | 8.80 |
| | Kneading and mixing time | | sec | 420 | 120 | 420 | 120 | 420 |
| Concrete strength | Compressive strength after 24 hours | | N/mm² | 1.9 | 4.2 | 2.8 | 4.4 | 2.5 |
| | Compressive strength after 14 days | | N/mm² | 48 | 42.5 | 40.5 | 44.7 | 40.2 |
| Workability | Evaluation | | | Fair | Fail | Fail | Fail | Fail |
| | Remarks | | | Poor in kneading and mixing | Thixotropic behavior was observed immediately after kneading and mixing | Poor in kneading and mixing | Thixotropic behavior was observed immediately after kneading and mixing | Poor in kneading and mixing |

**[Table 2-2]**

| Table 2-2: Ready-mixed concrete test (Comparative Example) | | | | | |
|---|---|---|---|---|---|
| | | | | Comparative Example 6 | Comparative Example 7 |
| Production of calcium carbonate | Raw material | | | Carbide dregs | Carbide dregs |
| | Particle size of removed hydrophobic impurities | | µm or more | 75 | 75 |
| | Solid content concentration | | wt% | 0.5 | 32 |
| | Reaction starting temperature | | °C | 28 | 14 |
| | Carbonation rate | | cation%/hr | 200 | 13 |
| | BET specific surface area | | m²/g | 3.0 | 16.9 |
| Calcium carbonate-blended ready-mixed concrete | P | | kg/m³ | 440 | 440 |
| | B | | kg/m³ | 220 | 220 |
| | C | | kg/m³ | 88 | 88 |
| | BFS | | kg/m³ | 132 | 132 |
| | F | | kg/m³ | 220 | 220 |
| | W/P | | wt% | 40 | 40 |
| | s/a | | % | 41 | 41 |
| | A | Addition ratio | wt% | 1.0 | 1.0 |
| | | Addition amount P·wt% | kg/m³ | 4.40 | 4.40 |
| | B | Addition ratio | wt% | 1.0 | 1.0 |
| | | Addition amount P·wt% | kg/m³ | 4.40 | 4.40 |
| | A + B addition amount P·wt% | | kg/m³ | 8.80 | 8.80 |
| | Kneading and mixing time | | sec | 420 | 120 |
| Concrete strength | Compressive strength after 24 hours | | N/mm² | 2.2 | 4.5 |
| | Compressive strength after 14 days | | N/mm² | 40.0 | 43.1 |
| Workability | Evaluation | | | Poor | Poor |
| | Remarks | | | Poor in kneading and mixing | Thixotropic behavior was observed immediately after kneading and mixing |

### [Reference Example 1]

Commercially available light calcium carbonate (Brilliant-1500, Shiraishi Kogyo Kaisha, Ltd., BET specific surface area: 13 m²/g) was prepared. Ready-mixed concrete containing the same components as in Example 1 except that the admixture B was not contained, was blended with calcium carbonate at a blending ratio presented in Table 3, and the compressive strength test was performed.

### [Reference Example 2]

Commercially available light calcium carbonate (Silver-W, Shiraishi Kogyo Kaisha, Ltd., BET specific surface area: 6 m²/g, spindle shape) was prepared. Ready-mixed concrete containing the same components as in Example 1 was blended with calcium carbonate at a blending ratio presented in Table 3, and the compressive strength test was performed.

### [Reference Example 3]

Commercially available large-particle ground calcium carbonate (WHITON-H, Toyo Fine Chemical Co., Ltd., BET specific surface area: 1.5 m²/g) was prepared. Ready-mixed concrete containing the same components as in Example 1 was blended with calcium carbonate at a blending ratio presented in Table 3, and the compressive strength test was performed.

### [Reference Example 4]

Calcium carbonate (BET specific surface area: 0.26 m²/g) produced by the method disclosed in JP 2014-148432 A (the method for producing calcium carbonate from concrete based waste (concrete sludge) containing unsolidified cement fine particles) was prepared. Ready-mixed concrete containing the same components as in Example 1 was blended with calcium carbonate at a blending ratio presented in Table 3, and the compressive strength test was performed.

**[Table 3]**

| Table 3: Ready-mixed concrete test (Reference Example) | | | | | | | |
|---|---|---|---|---|---|---|---|
| | | | | Reference Example 1 | Reference Example 2 | Reference Example 3 | Reference Example 4 |
| Production of calcium carbonate | Raw material | | | Limestone | Limestone | Limestone | Concrete sludge |
| | Particle size of removed hydrophobic impurities | | µm or more | | | | |
| | Solid content concentration | | wt% | | | | |
| | Reaction starting temperature | | °C | | | | |
| | Carbonation rate | | cation%/hr | | | | |
| | BET specific surface area | | m²/g | 13 | 6 | 1.5 | 0.26 |
| Calcium carbonate-blended ready-mixed concrete | P | | kg/m³ | 440 | 440 | 440 | 440 |
| | B | | kg/m³ | 220 | 220 | 220 | 220 |
| | C | | kg/m³ | 88 | 88 | 88 | 88 |
| | BFS | | kg/m³ | 132 | 132 | 132 | 132 |
| | F | | kg/m³ | 220 | 220 | 220 | 220 |
| | W/p | | wt% | 40 | 40 | 40 | 40 |
| | s/a | | % | 41 | 41 | 41 | 41 |
| | A | Addition ratio | wt% | 0.8 | 0.7 | 0.2 | 0.9 |
| | | Addition amount P·wt% | kg/m³ | 3.52 | 3.08 | 0.88 | 3.96 |
| | B | Addition ratio | wt% | | 0.1 | 0.1 | 0.1 |
| | | Addition amount P·wt% | kg/m³ | | 0.44 | 0.44 | 0.44 |
| | A + B addition amount P·wt% | | kg/m³ | | 3.52 | 1.32 | 4.40 |
| | Kneading and mixing time | | sec | 120 | 120 | 60 | 660 |
| Concrete strength | Compressive strength after 24 hours | | N/mm² | 7.79 | 3.46 | 2.18 | 3.54 |
| | Compressive strength after 14 days | | N/mm² | 45.4 | 30 | 15.7 | 35.4 |
| Workability | Evaluation | | | Fail | Good | Fail | Fail |
| | Remarks | | | Thixotropic behavior was observed immediately after kneading and mixing | Good in kneading and mixing | Low strength | Very poor in kneading and mixing |

### [Example 3]

### <Production of calcium carbonate>

Under the same conditions as in the method for producing calcium carbonate of Example 1, a spindle-shaped calcite-type calcium carbonate was obtained (BET specific surface area measured by a method in accordance with JIS Z 8830: 5.9 m²/g).

### <Production of ground improving material>

A ground improving material containing ground granulated blast-furnace slag 4000 (Japanese Industrial Standards JIS A 6206, density: 2.8 g/cm³ or more), crushed stone powder having a particle size of 2.5 mm or less (Japanese Industrial Standards JIS A 5041, density: 2.5 g/cm³ or more) as an aggregate, sodium silicate (SiO₂/Na₂O molar ratio: 2.0, mass percent concentration of Na₂O: 14.1 to 14.5 wt%, density: 1.48 to 1.53 g/cm³ or more), and water was prepared. The ground improving material was blended with the calcium carbonate obtained above and was kneaded and mixed using a kneader (name: Mortar Mixer MIC-362-1-01, company name: Marui & Co., Ltd.). The detailed blending ratio of the calcium carbonate-blended ground improving material was as described in Table 4. From this ground improving material, a specimen used in an unconfined compression test described below was prepared.

### <Unconfined compression test>

In the unconfined compression test, the unconfined compressive strength after 28 days and the unconfined compressive strength after 91 days of the ground improving material specimen were measured in accordance with Japanese Industrial Standards JIS A 1216:2020 "Method for unconfined compression test of soils".

### [Example 4]

Under the same conditions as in the method for producing calcium carbonate of Example 2, a spindle-shaped calcite-type calcium carbonate was obtained (BET specific surface area measured by a method in accordance with JIS Z 8830: 8.4 m²/g).

A ground improving material containing the same components as in Example 3 was blended with the obtained calcium carbonate, and the unconfined compression test was performed. The detailed blending ratio of the ground improving material and the blending ratio of calcium carbonate are presented in Table 4.

**[Table 4]**

| Table 4: Ground improving material test (Example) | | | | |
|---|---|---|---|---|
| | | | Example 3 | Example 4 |
| Production of calcium carbonate | Raw material | | Carbide dregs | Carbide dregs |
| | Particle size of removed hydrophobic impurities | µm or more | 100 | 150 |
| | Solid content concentration | wt% | 10 | 10 |
| | Reaction starting temperature | °C | 28 | 28 |
| | Carbonation rate | cation%/hr | 12 | 17 |
| | BET specific surface area | m²/g | 5.9 | 8.4 |
| Calcium carbonate-blended ground improving material | BFS | kg/m³ | 290 | 290 |
| | F | kg/m³ | 290 | 290 |
| | S2 | kg/m³ | 800 | 800 |
| | WG | kg/m³ | 13 | 13 |
| | Water/powder ratio | wt% | 84.6 | 84.6 |
| | Kneading and mixing time | sec | 60 | 60 |
| Ground improving material strength | Unconfined compressive strength after 28 days | N/mm² | 5.8 | 5.5 |
| | Unconfined compressive strength after 91 days | N/mm² | 6.78 | 6.48 |
| Workability | Evaluation | | Excellent | Excellent |
| | Remarks | | Very good in kneading and mixing | Very good in kneading and mixing |

### [Comparative Example 8]

Calcium carbonate was produced under the same conditions as in Example 1 except that the carbide dregs were not passed through any sieve. A spindle-shaped calcite-type calcium carbonate was obtained (BET specific surface area measured by a method in accordance with JIS Z 8830: 6.6 m²/g).

A ground improving material having the same components and blending ratio as in Example 3 was blended with the obtained calcium carbonate at the same blending ratio as in Example 3, and the unconfined compression test was performed.

### [Comparative Example 9]

Calcium carbonate was produced under the same conditions as in Example 1 except that the carbide dregs were passed through a sieve (Japanese Industrial Standards JIS Z 8801, company name: SIEVE FACTORY IIDA Co., Ltd.) having a mesh diameter of 75 µm, and carbon dioxide gas was introduced so that the carbonation rate of calcium ions was 50 cation%/hr (so that the time until the completion of the reaction was 2.0 hours). A spindle-shaped calcite-type calcium carbonate was obtained (BET specific surface area measured by a method in accordance with JIS Z 8830: 27.0 m²/g).

A ground improving material having the same components and blending ratio as in Example 3 was blended with the obtained calcium carbonate at the same blending ratio as in Example 3, and the unconfined compression test was performed.

### [Comparative Example 10]

Calcium carbonate was produced under the same conditions as in Example 1 except that the carbide dregs were passed through a sieve (Japanese Industrial Standards JIS Z 8801, company name: SIEVE FACTORY IIDA Co., Ltd.) having a mesh diameter of 75 µm, and carbon dioxide gas was introduced so that the carbonation rate of calcium ions was 0.5 cation%/hr (so that the time until the completion of the reaction was 200 hours). A spindle-shaped calcite-type calcium carbonate was obtained (BET specific surface area measured by a method in accordance with JIS Z 8830: 4.0 m²/g).

A ground improving material having the same components and blending ratio as in Example 3 was blended with the obtained calcium carbonate at the same blending ratio as in Example 3, and the unconfined compression test was performed.

**[Table 5]**

| Table 5: Ground improving material test (Comparative Example) | | | | | |
|---|---|---|---|---|---|
| | | | Comparative Example 8 | Comparative Example 9 | Comparative Example 10 |
| Production of calcium carbonate | Raw material | | Carbide dregs | Carbide dregs | Carbide dregs |
| | Particle size of removed hydrophobic impurities | µm or more | - | 75 | 75 |
| | Solid content concentration | wt% | 10 | 10 | 10 |
| | Reaction starting temperature | °C | 28 | 28 | 28 |
| | Carbonation rate | cation%/hr | 12 | 50 | 0.5 |
| | BET specific surface area | m²/g | 6.6 | 27.0 | 4.0 |
| Calcium carbonate-blended ground improving material | BFS | kg/m³ | 290 | 290 | 290 |
| | F | kg/m³ | 290 | 290 | 290 |
| | S2 | kg/m³ | 800 | 800 | 800 |
| | WG | kg/m³ | 13 | 13 | 13 |
| | Water/powder ratio | wt% | 84.6 | 84.6 | 84.6 |
| | Kneading and mixing time | sec | 185 | 220 | 215 |
| Ground improving material strength | Unconfined compressive strength after 28 days | N/mm² | 6.32 | 3.51 | 4.27 |
| | Unconfined compressive strength after 91 days | N/mm² | 7.39 | 6.23 | 6.62 |
| Workability | Evaluation | | Excellent | Poor | Poor |
| | Remarks | | Good in kneading and mixing | Poor in kneading and mixing | Poor in kneading and mixing |

### [Reference Example 5]

Commercially available light calcium carbonate (HAKUENKA CC, Shiraishi Kogyo Kaisha, Ltd., BET specific surface area: 26 m²/g) was prepared. A ground improving material having the same components and blending ratio as in Example 3 was blended with calcium carbonate at the same blending ratio as in Example 3, and the unconfined compression test was performed.

### [Reference Example 6]

Commercially available light calcium carbonate (PC, Shiraishi Kogyo Kaisha, Ltd., BET specific surface area: 6 m²/g, spindle shape) was prepared. A ground improving material having the same components and blending ratio as in Example 3 was blended with calcium carbonate at the same blending ratio as in Example 3, and the unconfined compression test was performed.

### [Reference Example 7]

Commercially available large-particle heavy calcium carbonate (WHITON-P-50, Toyo Fine Chemical Co., Ltd., BET specific surface area: 1.5 m²/g) was prepared. A ground improving material having the same components and blending ratio as in Example 3 was blended with calcium carbonate at the same blending ratio as in Example 3, and the unconfined compression test was performed.

### [Reference Example 8]

Commercially available light calcium carbonate (Silver-W, Shiraishi Kogyo Kaisha, Ltd., BET specific surface area: 6 m²/g, spindle shape) was prepared. A ground improving material having the same components and blending ratio as in Example 3 was blended with calcium carbonate at the same blending ratio as in Example 3, and the unconfined compression test was performed.

### [Reference Example 9]

Commercially available light calcium carbonate (Brilliant-1500, Shiraishi Kogyo Kaisha, Ltd., BET specific surface area: 13 m²/g) was prepared. A ground improving material having the same components and blending ratio as in Example 3 was blended with calcium carbonate at the same blending ratio as in Example 3, and the unconfined compression test was performed.

**[Table 6]**

| Table 6: Ground improving material test (Reference Example) | | | | | | | |
|---|---|---|---|---|---|---|---|
| | | | Reference Example 5 | Reference Example 6 | Reference Example 7 | Reference Example 8 | Reference Example 9 |
| Production of calcium carbonate | Raw material | | Limestone | Limestone | Limestone | Limestone | Limestone |
| | Particle size of removed hydrophobic impurities | µm or more | | | | | |
| | Solid content concentration | wt% | | | | | |
| | Reaction starting temperature | °C | | | | | |
| | Carbonation rate | cation%/hr | | | | | |
| | BET specific surface area | m²/g | 26 | 6 | 1.5 | 6 | 13 |
| Calcium carbonate-blended ground improving material | BFS | kg/m³ | 290 | 290 | 290 | 290 | 290 |
| | F | kg/m³ | 290 | 290 | 290 | 290 | 290 |
| | S2 | kg/m³ | 800 | 800 | 800 | 800 | 800 |
| | WG | kg/m³ | 13 | 13 | 13 | 13 | 13 |
| | Water/powder ratio | wt% | 84.6 | 84.6 | 84.6 | 84.6 | 84.6 |
| | Kneading and mixing time | sec | 252 | 180 | 180 | 195 | 210 |
| Ground improving material strength | Unconfined compressive strength after 28 days | N/mm² | 3.11 | 6.52 | 0.00 | 6.17 | 3.50 |
| | Unconfined compressive strength after 91 days | N/mm² | 5.91 | 10.44 | 2.13 | 7.90 | 6.45 |
| Workability | Evaluation | | Good | Excellent | Poor | Excellent | Good |
| | Remarks | | Slightly difficult in mixing | Good in kneading and mixing | Material separation Not solidified | Good in kneading and mixing | Slightly difficult in mixing |

The meanings of the abbreviations in Tables 1 to 6 are as follows.
P: Powder amount, sum of B and F below
B: Binder amount, sum of C and BFS below
C: Cement amount
BFS: Ground granulated blast-furnace slag amount
F: Calcium carbonate amount
W/P: Water/powder ratio
s/a: Fine aggregate ratio, s/a = Sv/Av × 100 [%], Sv is the fine aggregate volume, Av is the total aggregate volume (fine aggregate volume + coarse aggregate volume)
A: Admixture A, the addition ratio is a percentage with respect to the total weight of the ready-mixed concrete, the "addition amount P·wt%" is a weight with respect to the total volume of the powder contained in the ready-mixed concrete
B: Admixture B, the "addition ratio" is a percentage with respect to the total weight of the ready-mixed concrete, the "addition amount P·wt%" is a weight with respect to the total volume of the powder contained in the ready-mixed concrete
S2: Aggregate (crushed stone powder) amount
WG: Sodium silicate amount

Note that, in Tables 1 to 6 above, the evaluation is the workability of the concrete or the ground improving material. As described above, workability is a comprehensive evaluation in view of workability and constructability of the concrete or the ground improving material. In a series of experiments in the present specification, kneading and mixing characteristics of the ready-mixed concrete or the ground improving material and the compressive strength of each cured product were comprehensively determined, and workability was determined as excellent, good, fair, or fail in descending order. Remarks are comments on characteristics that should be noted at the time of kneading and mixing of the ready-mixed concrete or the ground improving material, and the strength of the cured product. The "thixotropic behavior was observed immediately after kneading and mixing" means that thixotropic property (property that viscosity decreases when shear force is continuously applied) is exhibited immediately after the start of kneading the ready-mixed concrete or the ground improving material. Thixotropic property is a property that cannot be said to be good as a property of general ready-mixed concrete.

The ready-mixed concrete blended with the calcium carbonate produced by the production method of the present invention is excellent in kneading and mixing performance without losing fluidity, and the strength of the concrete after curing is high. In Reference Examples, an experimental example in which commercially available calcium carbonate (limestone) was blended in ready-mixed concrete or a ground improving material was described; however, calcium carbonate produced by the production method of the present invention exhibited performance equivalent to that of commercially available calcium carbonate (for example, Reference Examples 2 and 6, or the like), and it was possible to provide excellent ready-mixed concrete or an excellent ground improving material. The production method of the present invention can produce commercially and industrially useful calcium carbonate by using carbide dregs, which are industrial wastes, as raw materials. In the production method of the present invention, when an exhaust gas is applied as a source supply of carbon dioxide, carbon dioxide emitted into the atmosphere can be reduced, so that it can contribute to stopping the progress of global warming and environmental pollution.

## Claims

1. A method for producing calcium carbonate, comprising the following steps:
a classification step of classifying carbide dregs containing calcium hydroxide and hydrophobic impurities and removing the hydrophobic impurities;
an adjustment step of adjusting a solid content concentration of the carbide dregs from which the hydrophobic impurities have been removed in the classification step; and
a carbon dioxide introduction step of introducing carbon dioxide into the carbide dregs from which the hydrophobic impurities have been removed in the classification step and in which the solid content concentration has been adjusted in the adjustment step.

2. The method for producing calcium carbonate according to claim 1, wherein a particle size of the hydrophobic impurities to be removed in the classification step is 45 µm or more.

3. The method for producing calcium carbonate according to claim 1 or 2, wherein the solid content concentration of the carbide dregs from which the hydrophobic impurities have been removed is adjusted to 1 to 30 mass% in the adjustment step.

4. The method for producing calcium carbonate according to any one of claims 1 to 3, wherein, in the carbon dioxide introduction step, carbon dioxide is introduced into the carbide dregs from which the hydrophobic impurities have been removed and in which the solid content concentration has been adjusted so that a carbonation rate of calcium ions is 1 to 40 cation%/hr.

5. The method for producing calcium carbonate according to any one of claims 1 to 4,
wherein a calcite-type calcium carbonate having a spindle shape is produced.

6. Calcium carbonate produced by the production method according to any one of claims 1 to 5.

7. A method for producing calcium carbonate-blended ready-mixed mortar or calcium carbonate-blended ready-mixed concrete, the method comprising:
classifying carbide dregs containing calcium hydroxide and hydrophobic impurities and removing the hydrophobic impurities;
adjusting a solid content concentration of the carbide dregs from which the hydrophobic impurities have been removed;
introducing carbon dioxide into the carbide dregs from which the hydrophobic impurities have been removed and in which the solid content concentration has been adjusted to obtain calcium carbonate; and
mixing the obtained calcium carbonate with ready-mixed mortar or ready-mixed concrete to produce calcium carbonate-blended ready-mixed mortar or calcium carbonate-blended ready-mixed concrete.

8. A method for improving ground, the method comprising:
classifying carbide dregs containing calcium hydroxide and hydrophobic impurities and removing the hydrophobic impurities;
adjusting a solid content concentration of the carbide dregs from which the hydrophobic impurities have been removed;
introducing carbon dioxide into the carbide dregs from which the hydrophobic impurities have been removed and in which the solid content concentration has been adjusted to obtain calcium carbonate; and
mixing the obtained calcium carbonate with a ground improving material and mixing or press-fitting the obtained calcium carbonate-blended ground improving material into ground to improve the ground.

9. A method for filling an underground cavity, the method comprising:
classifying carbide dregs containing calcium hydroxide and hydrophobic impurities and removing the hydrophobic impurities;
adjusting a solid content concentration of the carbide dregs from which the hydrophobic impurities have been removed;
introducing carbon dioxide into the carbide dregs from which the hydrophobic impurities have been removed and in which the solid content concentration has been adjusted to obtain calcium carbonate; and
mixing the obtained calcium carbonate with a filler and filling an underground cavity with the obtained calcium carbonate-blended filler.

10. A method for immobilizing carbon dioxide contained in an exhaust gas, the method comprising:
classifying carbide dregs containing calcium hydroxide and hydrophobic impurities and removing the hydrophobic impurities;
adjusting a solid content concentration of the carbide dregs from which the hydrophobic impurities have been removed; and
introducing an exhaust gas containing carbon dioxide into the carbide dregs from which the hydrophobic impurities have been removed and in which the solid content concentration has been adjusted to immobilize the carbon dioxide.
